Europäisches Patentamt

**European Patent Office**

Office européen des brevets

(19)

(11) Publication number: **0 407 381 B1**

## EUROPEAN PATENT SPECIFICATION

(12)

(45) Date of publication of patent specification: **19.01.94**   (51) Int. Cl.$^5$: **G01J 3/46**

(21) Application number: **88906421.8**

(22) Date of filing: **16.06.88**

(86) International application number:
**PCT/US88/02075**

(87) International publication number:
**WO 89/09383 (05.10.89 89/24)**

(54) **OBJECTIVE COLOR CHARACTERIZATION SYSTEM AND METHOD.**

(30) Priority: **31.03.88 US 175519**

(43) Date of publication of application:
**16.01.91 Bulletin 91/03**

(45) Publication of the grant of the patent:
**19.01.94 Bulletin 94/03**

(84) Designated Contracting States:
**DE FR GB IT NL**

(56) References cited:
**WO-A-86/04987**
**GB-A- 2 192 455**
**US-A- 3 601 589**

**COLOR RESEARCH & APPLICATION, vol. 12,
no. 4, August 1987, (New York, US), F.W.
Billmeyer, Jr. et al. : "Survey of color order
systems", pages 173-186.**

**PATENT ABSTRACTS OF JAPAN, vol. 11, no.
370 (P-642)(2817), 3 December 1987; & JP-
A-62142242**

(73) Proprietor: **Colwell Industries, Inc.**
**123 North Third Street**
**Minneapolis, Minnesota 55401(US)**

(72) Inventor: **STANZIOLA, Ralph**
**410 Clover Street**
**Neshanic Station, NJ 08853(US)**

(74) Representative: **Muir, Ian R. et al**
**HASELTINE LAKE & CO.**
**Hazlitt House**
**28 Southampton Buildings**
**Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

FIELD OF THE INVENTION

This invention relates to color description and notation systems, in particular a system which describes and notates a set of colors whose characteristics are derived from weighting the characteristics of a set of reference colors.

BACKGROUND

The appearance of a colored object is affected by three primary factors: the photometric characteristics of the light source which illuminates the color, the photometric characteristics of the colored object, and the perception of these characteristics by an observer. Additional factors such as texture, gloss, etc. may affect how a color is perceived by an observer, but have varying affects on the spectrophotometric characteristics of that color.

Colorimetric systems have been developed in an effort to objectively describe how colors are perceived by observers. The International Commission on Illumination (CIE) has, for example, developed a system for objective description of color by light source, object, and observer. The CIE developed a standardization of the illuminant and observer data. The color of the object under these standard conditions is identified by tristimulus values X,Y and Z. Each XYZ value is obtained by multiplying the reflectance of the colored sample, the power of the standard illuminant, and the calculated amount of each of the three primary colors (red, green, and blue) which, when combined, are found through observational tests to be the color equivalent of the object being described. This system is discussed in Billmeyer, "Survey of Color Order Systems," pages 176-177.

The tristimulus values X,Y, and Z are of somewhat limited value as color specifications because they do not correlate well to visual attributes. As a result the CIE adopted the use of chromaticity coordinates x, y, and z which are the amounts of each tristimulus value divided by the sum of all three.

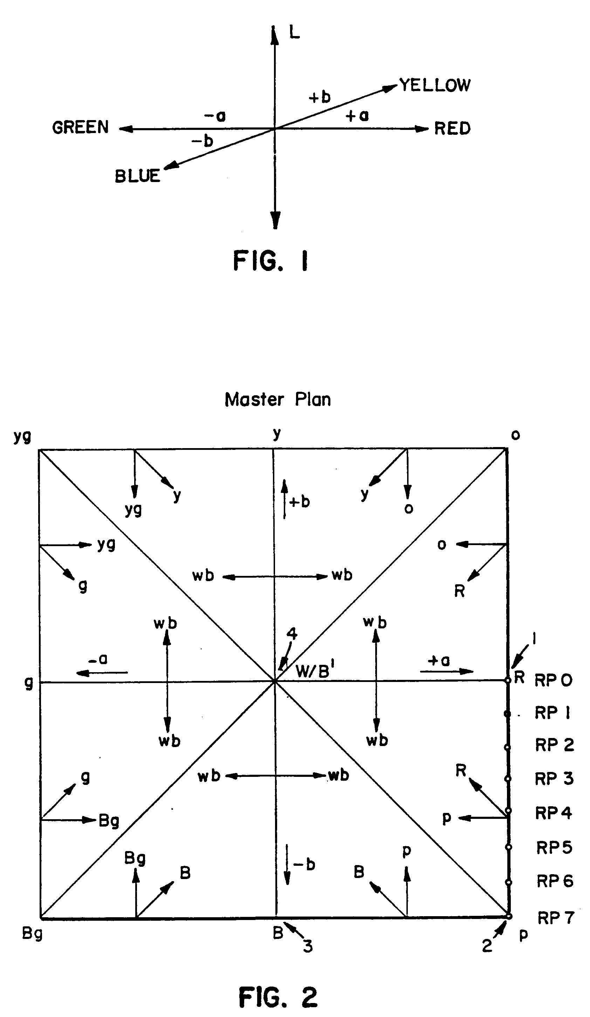

The CIE chromaticity calculations have been further transformed by the use of the L*a*b transformation. The L*a*b system identifies color by lightness or darkness as its L* value. The saturation, or amount of dullness or brightness (deviation from gray) a color has; as well as hue, or what is commonly called color (blue, green, etc.) are both identified using ±a, ±b values. The L*, a*, and b values may be used as coordinates to lay out the color system in a three-dimensional space. Typically, the L* value is shown in the vertical z-direction. The ±a*, ±b values are set in the XY plane. Plus a* is red, -a* is green, +b is yellow, and -b is blue. L*=0 is black, and L*=100 is white. Between these extremes of each value, all colors can be identified. See Fig. 1. GB-2.192.455 discloses (for example, at p. 3, lines 36-74) a color matching system which compares the L*a*b* of a color to be matched with stored data representing the L*a*b* values of a number of preselected color formulas.

In addition to the above-described color description systems, a number of other color order systems are commercially used to identify color samples and for other purposes. Among the most popular is the Munsell system. The Munsell system has a lightness value essentially corresponding to the L* value of the L*a*b system. Unlike the L*a*b system, hue and saturation are defined by a letter-number system corresponding to the hue and chroma characteristics of the color.

It would be desirable for a commercial color sample system to have several characteristics. Among them are that the system have representations and be layed out in a geometry which is generally consistent with the typical user's intuitions as to the components and relationships of the represented colours. Moreover, a system adapted to the L*a*b system would have advantages including ease of transformation between systems and ease of access in processing data available through the L*a*b system.

Colours subject to metamerism may have other types of characteristics which are identical. A system which only identifies colours as similar when there is no metamerism between the colours is desirable. A colour sample system would be desirable that simplifies matching efforts between a sample colour and a colour to be manufactured from a given set of colorants identifying the colour sample in a manner readily processible by a system which determines how to mix the available colorants. Ideally, such matching could be accurately achieved even for sample colours not identified in the system through an objective description of the colour based on identified sample colours.

## SUMMARY OF THE INVENTION

An objective colour notation system is described including methods for generating the colour sample characteristics of each colour in the system, a processing system adapted to the methods, and a colour system including samples derived by such a method.

According to a first aspect of the present invention, there is provided a method for generating a set of colour samples, together with the characteristics thereof, the method comprising the steps of:

a) selecting at least two reference colours;

b) accessing a set of colour characteristics data indicating the reflectance of each selected reference colour at each of a set of predetermined wavelengths;

c) generating descriptions of a set of intermediate colour samples by:

i) selecting at least two base colours from the set of reference colours for which a set of colour characteristic data is available;

ii) selecting the number of intermediate colours to be identified by the colour characteristics of the selected base colours;

iii) determining relative proportions of each base colour which characterises each intermediate colour to be described;

iv) calculating reflectance values at each predetermined wavelength for each intermediate colour proportionate to the sum of the reflectance values for each base colour at each corresponding wavelength multiplied by the relative proportion of each base colour which characterises the intermediate colour, for each intermediate colour being described; and

v) recording the calculated reflectance values; and

d) producing samples of said intermediate colours by mixing portions of colorants, each representing a selected base colour, in proportions corresponding to the proportions of the base colours which characterise the colour sample, for each colour sample to be generated.

According to a second aspect of the present invention, there is provided a system for generating a set of colour samples, together with the characteristics therewith, comprising:

a) storage means for storing colour characteristics data indicating the reflectance of each of a set of reference colours at each of a set of predetermined wavelengths and for storing data indicative of the number of intermediate colours to be generated;

b) central processing means under software control for:

i) accessing the data stored in the storage means;

ii) selecting at least two base colours from the set of reference colours having data stored in the storage means;

iii) selecting the number of intermediate colours to be identified by the colour characteristics of the selected base colours;

iv) calculating the relative proportions of each selected base colour which characterises each intermediate colour to be described; and

v) calculating reflectance values at each predetermined wavelength for each intermediate colour proportionate to the sum of the reflectance values for each base colour at each corresponding wavelength multiplied by the relative proportion of each base colour which characterises the intermediate colour, for each intermediate colour being described; and

c) output means for outputting the values calculated by the central processing means and for outputting the relative proportions of colourants representing said base colours required to produce samples of each of said intermediate colours.

## DESCRIPTION OF THE PREFERRED EMBODIMENT

The creation of a colour system in accordance with the present invention is described herein, by way of example, through a two-dimensional plane in the L*a*b system wherein L* is held constant. However, the principles described are adaptable to other systems and geometries, as will be clear.

Figure 2 shows a grid in the L*a*b geometry where L is constant. The +a direction equates to a specific red (R), the -a direction to a specific green (g), the +b direction to a specific yellow (y), and the -b direction to a specific blue (B). In between the ± a and ± b axes are middle coordinates corresponding to the mixed colors orange (o), yellow-green (yg) blue-green (Bg), and purple (p). Along a line extending from the center of the map outward in any direction, the amount of saturation or grayness (white-black or wb) decreases. Thus, the amount of grayness is constant along the vectors (labeled wb in Fig. 2) perpendicular to lines extending from the center of the map. Fig. 2 also shows vectors for the various reference colors, labeled with the abbreviation for the pertinent reference color, which show lines along which the labeled color has a constant L* value and a constant proportion of the labeled color. For example, the line labeled R in the triangle formed by the points W/B', o, and R in Figure 2 represents a line along which all represented colors have a proportion of the chosen Red color equal to 40%.

To generate the spectrophotometric and other characteristics of a set of color samples represented by a portion of the map shown in Fig. 2, a set of reference points are selected. For example, a quadrilateral-shaped region on the map shown in Fig. 1 may be created with four reference points. An example region described herein is bound by the points labeled 1, 2, 3, and 4, corresponding to the reference colors red, purple, blue, and gray. More or fewer reference points may be used to define the boundaries of the region represented by the map wherein color sample characteristics are to be generated. The reference points used may represent the reference colors represented by the abbreviations shown in Fig. 2, or by reference points which include combinations of the colors represented by these abbreviations.

The reference colors 1, 2, 3, and 4 are defined by their spectrophotometric characteristics. These characteristics are represented by numerical data representing the reflectance of each reference color at each of a selected group of wavelengths. Each reference color may also be characterized by tristimulus values and L*a*b values. Other characteristic data may also describe the reference colors. Such data may be derived by evaluating a color sample matching the reference color. Alternatively, the reference color data may be obtained from sources of data representing the desired reference colors, and may or may not be based on an actual color sample.

With the data describing the color characteristics of each of the selected reference colors, the generation of data describing the color characteristics of a selected number of color samples is accomplished by processing the characteristics of the reference colors. A representative process and processing unit are described herein. As will be clear from the disclosure, systems equivalent to the present system amy utilize a different sequence of steps in a different manner, yet reach the same result.

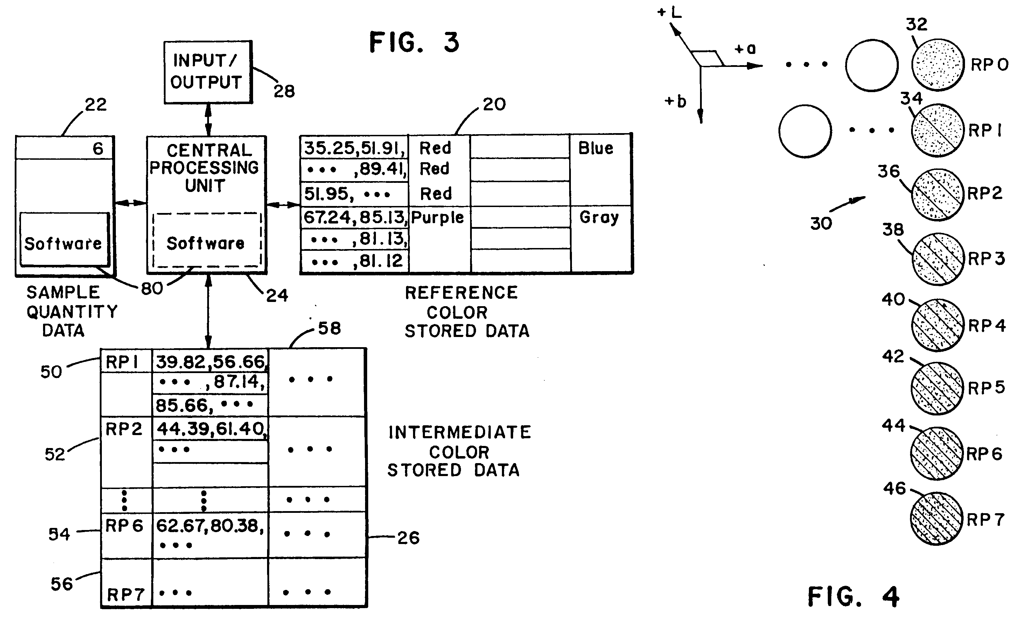

Fig. 4 shows a set of data generated between two reference colors: a color equivalent to one hundred percent of a specific red (designated RP0), and a color equivalent to one hundred percent of a specific purple (designated RP7). In this example, the reference colors RP0 and RP7 serve as the base colors the data of which will characterize a set of intermediate colors. These two base colors have no components of other hues, nor of gray. However, base colors may be chosen having components of multiple colors. The data for these two base colors serves as the starting point from which the data may be generated for the intermediate colors, designated RP1, RP2,...RP6. The locations of each of these colors is shown in Fig. 2 along a straight line extending from reference point 1 to reference point 2.

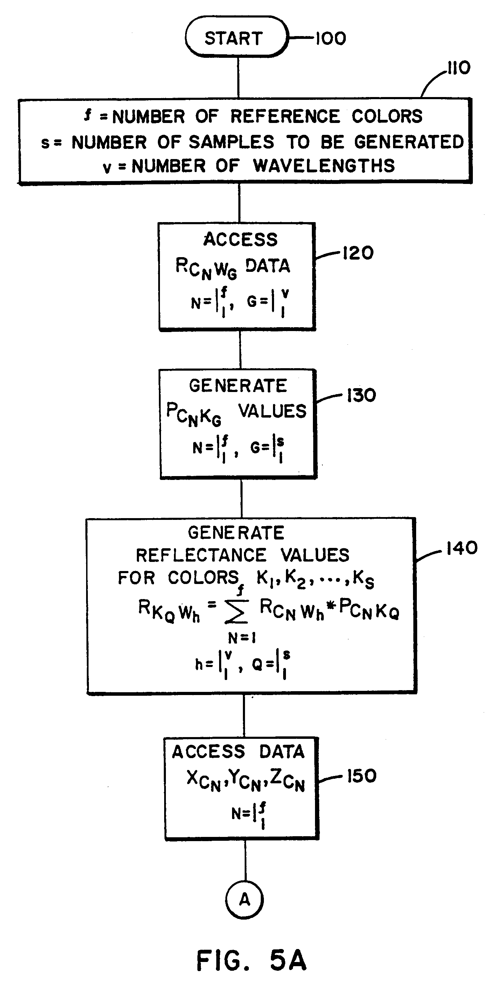

To generate the characteristics of the intermediate colors, the only initial data needed are the reflectance values for the reference colors (accessed at 120 in the flowchart shown in Fig. 5A), characteristics of the reference points RP0 and RP7 and the number of intermediate color samples to be characterized (accessed at 110 in Fig 5A). In Fig. 4, by way of example, the number of intermediate colors chosen is 6.

The intermediate color characteristics are generated such that each of the samples has proportions of the reference colors RP0 and RP7 representative of the intermediate color sample's relative location between the reference points, or, equivalently, representative of the RP number 1-6 of the intermediate color. In Fig. 3, the proportion of red is shown as decreasing by a decimal representation of 1/7 (approximately 14.28%) for each successive sample, with the proportion of purple increasing by an amount equal to the amount of the decrease of the intermediate color's proportion of the red reference color. These calculations are made at step 130 of Figure 5A. The proportions of each color RP0-RP7 are shown directly below the reference color proportions portion of Table A.

For samples located closer to the center of the map shown in Fig. 2, the reference and intermediate color samples will also have proportions of gray. Other intermediate color samples will have other combinations of reference colors. In all cases, the proportions of all reference colors which comprise an intermediate color (or a reference color) will add to 100%. The data shown in Fig. 3 and Table A is a rounded-off representation of the proportion and reflectance data actually used by the system, which may be carred to several decimal places for greater accuracy.

Among the characteristics generated are the spectrophotometric characteristics of each intermediate color sample. The spectrophotometric data is generated at each wavelength for which there is a reflectance value for the reference colors. The reflectance value for each intermediate color sample is derived by weighting the reflectance values for each reference color at the same wavelength.

For example, as shown in part in Fig. 3 (at the reference color stored data means 20) and more fully in Table A, at 400 nanometers the RP0 reflectance is 35.25 units and the RP7 reflectances is 67.24 units. The difference between these numbers, 31.99, is divided by 7 to derive the 4.57 unit difference in the 400 nanometer reflectance for each sample RP0-RP7. This difference is shown by the successive reflectance values for each color sample at the 400 nanometer wavelength.

Similar results are achieved by weighting the reference color reflectances at the 400 nanometer wavelength according to the relative proportions of those reference colors represented by each respective intermediate color. Thus, RP1's reflectance (comprised of 86% RP0 and 14% RP7, approximately) at 400 nanometers is approximately equal to the sum of 86% x 35.25 and 14% x 67.24, or 39.82, units.

The above process may be used to generate the reflectance value for each wavelength for which data exists for the reference colors. The process is shown at step 140 in Figure 5A. The process is also repeated for each intermediate color RP1-RP6.

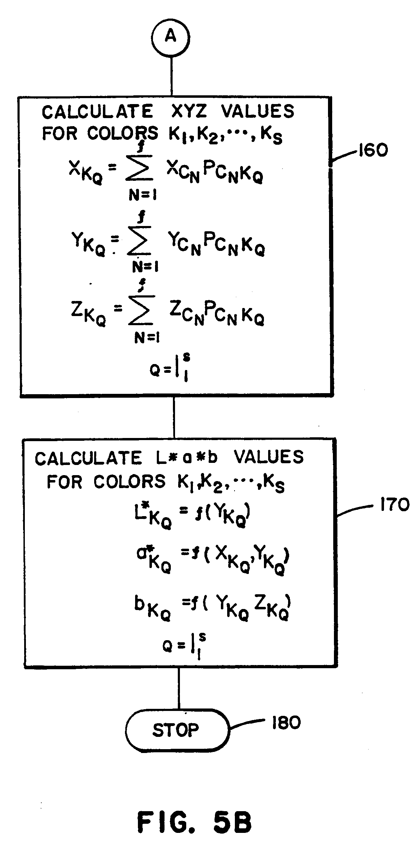

A similar process of calculating data may be used to generate tristimulus (XYZ) values. As for the reflectance values at each wavelength, the XYZ values are weighted in accordance with the reference color XYZ values. This process is shown by steps 150 and 160 in Figs. 5A and 5B. However, the L*a*b characteristics are not generated in this manner. Instead, they are derived from the photometric or XYZ characteristics of each intermediate color, using transformations or other stored information. The process is indicated by step 170 in Figure 5B. Thus, the described process generates color sample data in the L*a*b geometry which is proportionate to the more objective color description of photometric or tristimulus characteristics, yet readily describes each sample's L*a*b values. Although other transformations or color characteristic data are not described herein, it is clear from the description that, through stored transformations or other data, other characteristics of colors (e.g. Munsell notations) may also be generated.

The characteristics of intermediate color samples may be generated between reference colors and previously-generated intermediate color sample characteristics, or between two intermediate color samples. Such additional color sample characteristics are generated using the above-described process or its equivalent, using the color samples between which the sample to be generated would be located on the map shown in Fig. 2. Thus, an unlimited set of color sample characteristics can be generated from a limited set of reference color characteristics data.

With the above-described notation system, colors not represented in the generated data can be accurately and easily described. For example, based on the data shown in Fig. 4 and Table A, a color may be designated as RP2.4. The spectrophotometric, XYZ, L*a*b, and any other desired characteristics of such a designated color may be readily generated by a processing system similar to a processing system which would generate the intermediate color characteristics as described above. The RP2.4 description indicates a weighting of 60% RP2 and 40% RP3. The photometric and tristimulus characteristics of the RP2.4 sample may be generated in accordance with this weighting. Other characteristics, such as L*a*b characteristics, may also be derived by transformations or similar methods. Thus, even colors not expressly described by the set of reference and intermediate color sample characteristics can be intuitively described by the user in an accurate manner without an actual color sample or previously-generated characteristics data corresponding to the selection.

The color sample processing and generating system and method described herein is also readily adaptable to accurate color matching. Colors can be accurately matched in a number of ways. For example, use of reference colors corresponding to the colors available for mixing to generate intermediate color samples will enable a close match of a selected color. RP2, for example, may be achieved by mixing about 71% of the red reference color with about 29% of the purple reference color. In this manner, even hybrid colors which may be selected by a user and not shown by the color notation system or samples generated thereby, e.g. a sample designated RP2.4 based on the data shown in Fig. 3, can be matched in an equally accurate manner. Thus, an infinite number of colors can be accurately described and matched from a limited number of reference colors.

The above-described process may be performed using a system such as that shown in Figure 3. The color characteristics of the reference colors are stored in data storage means 20 by way of random access memory or the like. The number of samples to be generated is inputted into the system by input/output means 28, for example a video terminal having a keyboard. This input is stored in storage means, which may also be random access memory such as storage means 20, but are shown separately as storage means 22 for clarity. The central processing unit (CPU) 24 is under the control of software 80 shown stored in storage means 20 or, alternatively, in CPU 24. Software 80 represents the control instructions for executing the instructions indicated in the flowcharts shown in Figures 5A and 5B. The CPU may process the stored data to generate the characteristics of each intermediate color, which is shown as stored at storage location 58 for example.

The steps performed by the software-controlled processing means used to generate color samples in accordance with the present invention are shown at their most basic level in the flowcharts shown in Figs. 5A and 5B. The system starts by accessing the selected number of reference colors to be used to generate the intermediate colors, designated by the symbol f. This number will typically be 4 for a quadrilateral-shaped color chart. The system also accesses the number indicating the number of samples to be generated by the system, designated by the letter s. Finally, the system accesses the number of wavelength increments for which there is stored data for the reference colors, indicated by the letter v. This accessing step is indicated by step 110 of the flowchart.

The system also accesses the reflectance data for each reference color. Each piece of data stored in the storage means may be designated as shown by the designation

$$R_{C_N}W_G.$$

This symbol indicates a reflectance value for reference color $C_N$ at wavelength $W_G$. Thus, a complete set of this data will include integer values for N of between 1 and f, and for G between 1 and v, as shown at step 120.

Also shown, at step 130, is the step of generating the relative proportions of each reference color which comprise a given sample to be generated. These values are stored in a matrix with each value represented by the symbol

$$P_{C_N}K_G.$$

This designation represents the proportion of reference color $C_N$ for color sample $K_G$ to be generated. Thus, the P values will be generated for integer values of N ranging from 1 to f and for values of G ranging from 1 to s.

The accessed reflectance data and generated reference color proportion data is utilized at step 140 to generate the reflectance values at each wavelength for each color sample to be generated. As stated above, the reflectance value at a particular wavelength for a particular color to be generated will equal the sum of the products of the relative proportions of each reference color and the reflectance value for that reference color. This summation process is described by the equation shown in step 140.

The tristimulus, or XYZ values, may be generated in a similar manner. Step 150 shows the accessing of the tristimulus data for the reference colors. $X_{Cn}$,

$$Y_{C_n} \text{ and } Z_{C_N}$$

represent the X, Y and Z values, respectively of reference color $C_N$.

The XYZ values for each color to be generated, as for the reflectance values, is defined by the summation of a product of the characteristic values for each reference color and the relative proportion of the reference color which comprises the color to be generated. These summations for each characteristic, X, Y, and Z, are shown in the equations described in step 160.

Finally, the L*a*b values for each color to be generated may be calculated based on the XYZ values. As indicated in step 170, the L* value for a given color sample to be generated, $K_Q$ is a function of the Y-value of that generated color sample. The a* value of that color sample is a function of the X and Y values of that color sample, and the b value is a function of the Y and Z values of that color sample.

TABLE A is an example of a set of data generated in accordance with the present invention. The four reference colors red, purple, gray, and blue are listed across the top of the chart with their corresponding percentages. Based on these percentages and the stored data for the reference colors characteristics for each intermediate color are generated.

## TABLE A

### ADDITIVE REFLECTANCE DATA AND L*a*b CALCULATIONS
### REFERENCE COLOR PROPORTIONS

| | 100% RED | 86% RED | 71% RED | 57% RED |
|---|---|---|---|---|
| | 0% PURPLE | 14% PURPLE | 29% PURPLE | 43% PURPLE |
| | 0% GRAY | 0% GRAY | 0% GRAY | 0% GRAY |
| | 0% BLUE | 0% BLUE | 0% BLUE | 0% BLUE |
| SAMPLE CODE | RP0 | RP1 | RP2 | RP3 |

WAVELENGTH (nm)

| | | REFLECTANCES | | |
|---|---|---|---|---|
| 400 | 35.25 | 39.82 | 44.39 | 48.96 |
| 420 | 51.92 | 56.66 | 61.41 | 66.15 |
| 440 | 45.70 | 51.48 | 57.27 | 63.04 |
| 460 | 28.90 | 35.66 | 42.43 | 49.19 |
| 480 | 11.98 | 18.27 | 24.55 | 30.84 |
| 500 | 5.89 | 10.45 | 15.00 | 19.56 |
| 520 | 9.13 | 11.58 | 14.04 | 16.49 |
| 540 | 13.37 | 13.69 | 14.01 | 14.33 |
| 560 | 25.17 | 23.79 | 22.41 | 21.03 |
| 580 | 52.46 | 49.62 | 46.79 | 43.95 |
| 600 | 76.14 | 72.53 | 68.93 | 65.32 |
| 620 | 85.67 | 81.92 | 78.16 | 74.41 |
| 640 | 90.11 | 86.53 | 82.95 | 79.37 |
| 660 | 92.11 | 88.66 | 85.22 | 81.77 |
| 680 | 90.74 | 87.13 | 83.53 | 79.93 |
| 700 | 89.41 | 85.66 | 81.91 | 78.16 |
| X | 51.95 | 51.04 | 50.13 | 49.22 |
| Y | 34.05 | 34.05 | 34.05 | 34.05 |
| Z | 36.56 | 42.93 | 49.29 | 55.66 |
| L* | 65.00 | 65.00 | 65.00 | 65.00 |
| a* | 59.98 | 57.57 | 55.14 | 52.67 |
| b | 0.00 | − 7.67 | − 14.62 | −21.00 |

7

TABLE A - CONTINUED -

| | 43% RED | 29% RED | 14% RED | 0% RED |
| | 57% PURPLE | 71% PURPLE | 86% PURPLE | 100% PURPLE |
| | 0% GRAY | 0% GRAY | 0% GRAY | 0% GRAY |
| | 0% GRAY | 0% GRAY | 0% BLUE | 0% BLUE |
| SAMPLE CODE | RP4 | RP5 | RP6 | RP7 |
| WAVELENGTH (nm) | | REFLECTANCES | | |
| --- | --- | --- | --- | --- |
| 400 | 53.53 | 58.10 | 62.67 | 67.24 |
| 420 | 70.90 | 75.64 | 80.38 | 85.13 |
| 440 | 68.83 | 74.61 | 80.40 | 86.18 |
| 460 | 55.96 | 62.72 | 69.49 | 76.25 |
| 480 | 37.13 | 43.41 | 49.70 | 55.99 |
| 500 | 24.12 | 28.68 | 33.23 | 26.30 |
| 520 | 18.94 | 21.39 | 23.85 | 37.79 |
| 540 | 14.64 | 14.96 | 15.28 | 15.60 |
| 560 | 19.64 | 18.26 | 16.88 | 15.50 |
| 580 | 41.11 | 38.27 | 35.44 | 32.60 |
| 600 | 61.72 | 58.11 | 54.51 | 50.90 |
| 620 | 70.65 | 66.90 | 63.14 | 59.39 |
| 640 | 75.79 | 72.21 | 68.64 | 65.06 |
| 660 | 78.32 | 74.87 | 71.43 | 67.98 |
| 680 | 76.32 | 72.71 | 69.11 | 65.51 |
| 700 | 74.42 | 70.67 | 66.92 | 63.17 |
| X | 48.30 | 47.39 | 46.48 | 45.57 |
| Y | 34.05 | 34.05 | 34.05 | 34.05 |
| Z | 62.03 | 68.40 | 74.76 | 81.13 |
| L* | 65.00 | 65.00 | 65.00 | 65.00 |
| a* | 50.18 | 47.65 | 45.09 | 42.49 |
| b | -26.91 | -32.42 | -37.60 | -42.50 |

Color sample identifiers or codes may also be generated by the processing unit as shown at storage locations 50, 52, 54, and 56. The generated data may be outputted at the output means 28, shown by way of example as combined with the input means. The generated data may also be stored in storage means 26.

The system is best utilized with an actual color chart having samples created as a result of the characteristic data generated and having sample identifiers or codes representative of the proportion of the reference colors used to generate the samples. Figure 4 shows a representative portion of a color chart 30 set in the L*a*b geometry, L* = constant, having color samples generated from the data shown in Figure 3 corresponding to the RP0, RP1 ..., RP7 identification system (32, 34, 36, 38, 40, 42, 44 and 46, respectively). With color samples having equal areas as is typical, the location of each sample on the color chart may not exactly correspond to the equivalent relation between the color sample and the center axis of the L*a*b plane as shown. However, the sample will be accurately positioned relative to all other samples.

Moreover, even when the color samples are not available for matching or have faded or are otherwise no longer accurate representations of the colors, the system enables matching which minimizes metamerism. Every color sample identifiable by the system is readily describable by its spectrophotometric characteristics. Computer or other processing of the spectrophotometric characteristics of the colors available for mixing may ensure a close match between the desired and actual spectrophotometric characteristics which will minimize metamerism.

The system may generate color samples readily identifiable in the L*a*b system, and thus can accurately present colors to users in the L*a*b geometry. Other advantages of the system should be clear from the description.

**Claims**

1. A method for generating a set of colour samples, together with the characteristics thereof, the method comprising the steps of:
   a) selecting at least two reference colours;
   b) accessing a set of colour characteristics data indicating the reflectance of each selected reference colour at each of a set of predetermined wavelengths;
   c) generating descriptions of a set of intermediate colour samples by:
      i) selecting at least two base colours from the set of reference colours for which a set of colour characteristic data is available;
      ii) selecting the number of intermediate colours to be identified by the colour characteristics of the selected base colours;
      iii) determining relative proportions of each base colour which characterises each intermediate colour to be described;
      iv) calculating reflectance values at each predetermined wavelength for each intermediate colour proportionate to the sum of the reflectance values for each base colour at each corresponding wavelength multiplied by the relative proportion of each base colour which characterises the intermediate colour, for each intermediate colour being described; and
      v) recording the calculated reflectance values; and
   d) producing samples of said intermediate colours by mixing portions of colorants, each representing a selected base colour, in proportions corresponding to the proportions of the base colours which characterise the colour sample, for each colour sample to be generated.

2. The method of claim 1 wherein the step of selecting reference colours further includes the selection of reference colours having equal L* values.

3. The method of claim 1 further comprising the steps of:
   a) describing each of the selected reference colours by a set of colour characteristic data further including data indicating the tristimulus values of each colour; and
   b) generating tristimulus values for each intermediate colour which are proportionate to the tristimulus values of each base colour, and the relative weight to be given each base colour, for each intermediate colour being described.

4. The method of claim 1 further comprising the steps of:
   a) selecting a set of base colours different from any set of base colours previously selected;
   b) describing the selected different set of base colours by a set of colour characteristics data indicating the reflectance of each colour at each of a set of predetermined wavelengths;
   c) repeating the steps of generating descriptions of each intermediate colour sample, using the newly-selected set of base colours; and
   d) repeating the step of selecting a different set of base colours until all sets of intermediate colour sample characteristics data to be generated have been generated.

5. The method of claim 3 further comprising the steps of:
   a) selecting a set of base colours different from any set of base colours previously selected;

b) describing the selected different set of base colours by a set of colour characteristics data indicating the reflectance of each colour at each of a set of predetermined wavelengths and by data indicating the tristimulus values of each colour;

c) repeating the steps of generating descriptions of each intermediate colour sample, using the newly-selected set of base colours; and

d) repeating the step of selecting a different set of base colours until all sets of intermediate colour sample characteristic data to be generated have been generated.

6. The method of claim 1 further comprising the step of calculating the L*a*b values for each intermediate colour from the colour characteristics data generated for each intermediate colour.

7. The method claim 1 wherein the reference colours are selected from the following colours: gray, red, yellow, orange, green, blue, yellow-green, blue-green, and purple.

8. The method of claim 7 wherein the number of reference colours selected is four.

9. A method in accordance with any preceding claim further comprising the step of:

locating each colour sample in the L*a*b plane at a location generally corresponding to its relative location between the approximate, appropriate location for each base colour from which the colour sample data was generated, the colour of the colour sample representing the colour mixed in the step of mixing portions of each selected base colour.

10. A method in accordance with claim 9 further comprising the step of labelling each colour sample corresponding to a set of colour characteristics data in a manner corresponding to the characteristics of the colour sample generated.

11. A method in accordance with claim 9 further comprising the step of labelling each colour sample with codes representative of the proportion of each base colour represented by the colour sample.

12. A system for generating a set of colour samples, together with the characteristics thereof, comprising:

a) storage means (20) for storing colour characteristics data indicating the reflectance of each of a set of reference colours at each of a set of predetermined wavelengths and for storing data indicative of the number of intermediate colours to be generated;

b) central processing means (24) under software control for:

i) accessing the data stored in the storage means;

ii) selecting at least two base colours from the set of reference colours having data stored in the storage means;

iii) selecting the number of intermediate colours to be identified by the colour characteristics of the selected base colours;

iv) calculating the relative proportions of each selected base colour which characterises each intermediate colour to be described; and

v) calculating reflectance values at each predetermined wavelength for each intermediate colour proportionate to the sum of the reflectance values for each base colour at each corresponding wavelength multiplied by the relative proportion of each base colour which characterises the intermediate colour, for each intermediate colour being described; and

c) output means 28 for outputting the values calculated by the central processing means and for outputting the relative proportions of colourants representing said base colours required to produce samples of each of said intermediate colours.

13. The system in accordance with claim 12, further comprising a second storage means (22) for storing the data generated by the central processing means.

14. A system in accordance with claim 12, wherein the central processing means is further under software control for generating L*a*b values for each colour sample having stored characteristics.

**Patentansprüche**

1. Verfahren zum Herstellen eines Satzes von Farbproben zusammen mit ihren Charakteristiken, wobei das Verfahren die folgenden Schritte umfaßt:
   a) Auswählen von zumindest zwei Referenzfarben;
   b) Zugreifen auf einen Satz von Farbcharakteristikdaten, die den Reflexionsfaktor jeder ausgewählten Referenzfarbe bei jeder vorherbestimmten Wellenlängen eines Satzes angeben;
   c) Erzeugen von Darstellungen eines Satzes von Zwischenfarbproben durch:
      i) Auswählen von zumindest zwei Grundfarben aus dem Satz von Referenzfarben, für welche ein Satz von Farbcharakteristikdaten verfügbar ist;
      ii) Auswählen der Anzahl von Zwischenfarben, die durch die Farbcharakteristiken der ausgewählten Grundfarben identifiziert werden können;
      iii) Bestimmen der relativen Anteile jeder Grundfarbe, welche jede darzustellende Zwischenfarbe charakterisiert;
      iv) Berechnen der Reflexionsfaktorwerte bei jeder vorherbestimmten Wellenlänge für jede Zwischenfarbe proportional zu der Summe der Reflexionsfaktorwerte für jede Grundfarbe bei der jeweils entsprechenden Wellenlänge multipliziert mit dem relativen Anteil jeder Grundfarbe, die die Zwischenfarbe charakterisiert, für jede darzustellende Zwischenfarbe; und
      v) Aufzeichnen der berechneten Reflexionsfaktorwerte; und
   d) Herstellen von Proben von besagten Zwischenfarben durch Mischen von Farbstoffen, die jeweils eine ausgewählte Grundfarbe repräsentieren, in Anteilen, die den Anteilen der Grundfarben entsprechen, welche die Farbprobe charakterisieren, für jede zu erzeugende Farbprobe.

2. Verfahren nach Anspruch 1, dadurch gekennzeichnet, daß der Schritt des Auswählens der Referenzfarben außerdem das Auswählen von Referenzfarben mit gleichen L*-Werten enthält.

3. Verfahren nach Anspruch 1, gekennzeichnet durch:
   a) Darstellen jeder der ausgewählten Referenzfarben durch einen Satz von Farbcharakteristikdaten, die ferner Daten enthalten, die die Tristimuluswerte jeder Farbe angeben; und
   b) Erzeugen von Tristimuluswerten für jede Zwischenfarbe, die proportional zu den Tristimuluswerten jeder Grundfarbe sind, und von dem relativen, jeder Grundfarbe zu gebenden Gewicht für jede darzustellende Zwischenfarbe.

4. Verfahren nach Anspruch 1, gekennzeichnet durch:
   a) Auswählen eines Satzes von Grundfarben, der sich von jedem Satz von zuvor ausgewählten Grundfarben unterscheidet;
   b) Darstellen des ausgewählten, anderen Satzes von Grundfarben durch einen Satz von Farbcharakteristikdaten, die den Reflexionsfaktor jeder Farbe bei jeder vorherbestimmten Wellenlänge eines Satzes angeben;
   c) Wiederholen der Schritte des Erzeugens von Darstellungen für jede Zwischenfarbprobe unter Benutzung des neu ausgewählten Satzes von Grundfarben; und
   d) Wiederholen des Schrittes des Auswählens eines anderen Satzes von Grundfarben bis alle Sätze von Zwischenfarbprobencharakteristikdaten, die zu erzeugen sind, erzeugt worden sind.

5. Verfahren nach Anspruch 3, gekennzeichnet durch:
   a) Auswählen eines Satzes von Grundfarben, der sich von jedem zuvor bestimmten Satz von Grundfarben unterscheidet;
   b) Darstellen des ausgewählten, anderen Satzes von Grundfarben durch einen Satz von Farbcharakteristikdaten, die den Reflexionsfaktor jeder Farbe bei jeder zuvor bestimmten Wellenlänge eines Satzes angeben, und durch Daten, die die Tristimuluswerte jeder Farbe angeben;
   c) Wiederholen der Schritte des Erzeugens von Darstellungen für jede Zwischenfarbprobe unter Benutzung des neu ausgewählten Satzes von Grundfarben; und
   d) Wiederholen des Schrittes des Auswählens eines anderen Satzes von Grundfarben bis alle Sätze von Zwischenfarbprobencharakteristikdaten, die zu erzeugen sind, erzeugt worden sind.

6. Verfahren nach Anspruch 1, gekennzeichnet durch Berechnen der L*a*b-Werte für jede Zwischenfarbe aus den Farbcharakteristikdaten, die für jede Zwischenfarbe erzeugt werden.

**7.** Verfahren nach Anspruch 1, dadurch gekennzeichnet, daß die Referenzfarben aus den folgenden Farben ausgewählt werden: Grau, Rot, Gelb, Orange, Grün, Blau, Gelbgrün, Blaugrün und Purpur.

**8.** Verfahren nach Anspruch 7, dadurch gekennzeichnet, daß die Anzahl von ausgewählten Referenzfarben vier beträgt.

**9.** Verfahren nach irgendeinem der vorangegangenen Ansprüche, gekennzeichnet durch Anordnen jeder Farbprobe in der L\*a\*b-Ebene an einer Stelle, die im allgemeinen der relativen Position der Farbprobe bezüglich der ungefähren, geeigneten Position jeder Grundfarbe, aus welcher die Farbprobendaten erzeugt werden, entspricht, wobei die Farbe der Farbprobe die Farbe darstellt, die in dem Schritt des Mischens aus Anteilen jeder ausgewählten Grundfarbe gemischt wurde.

**10.** Verfahren nach Anspruch 9, gekennzeichnet durch Markieren jeder Farbprobe, die einem Satz von Farbcharakteristikdaten entspricht, in einer den Charakteristiken der zu erzeugenden Farbprobe entsprechenden Art.

**11.** Verfahren nach Anspruch 9, gekennzeichnet durch den Schritt des Markierens jeder Farbprobe mit Codierungen, die den Anteil jeder durch die Farbprobe repräsentierten Grundfarbe darstellen.

**12.** System zum Erzeugen eines Satzes von Farbproben umfassend:
a) ein Speichermittel (20) zum Speichern von Farbcharakteristikdaten, die den Reflexionsfaktor jeder Farbe eines Satzes von Referenzfarben bei jeder ausgewählten Wellenlänge eines Satzes angeben, und zum Speichern von Daten, die die Anzahl von zu erzeugenden Zwischenfarben angeben;
b) eine softwaregesteuerte Zentralrecheneinheit (24) zum:
    i) Zugreifen auf in dem Speichermittel gespeicherte Daten;
    ii) Auswählen von zumindest zwei Grundfarben aus dem Satz von Referenzfarben mit in dem Speichermittel gespeicherten Daten;
    iii) Auswählen der Anzahl von Zwischenfarben, die durch die Farbcharakteristiken der ausgewählten Grundfarben zu identifizieren sind;
    iv) Berechnen der relativen Anteile jeder ausgewählten Grundfarbe, die jede darzustellende Zwischenfarbe charakterisiert; und
    v) Berechnen der Reflexionsfaktorwerte bei jeder vorherbestimmten Wellenlänge für jede Zwischenfarbe proportional zu der Summe der Reflexionsfaktorwerte für jede Grundfarbe bei der jeweils entsprechenden Wellenlänge multipliziert mit dem relativen Anteil jeder Grundfarbe, die die Zwischenfarbe charakterisiert, für jede darzustellende Zwischenfarbe; und
c) ein Ausgabemittel (28) zum Ausgeben der durch die Zentralrecheneinheit berechneten Werte und zum Ausgeben der relativen Anteile der Farbkomponenten, die besagte Grundfarben repräsentieren, die zum Herstellen von Proben jeder der besagten Zwischenfarben benötigt werden.

**13.** System nach Anspruch 12, gekennzeichnet durch ein zweites Speichermittel (22) zum Speichern der durch die Zentralrecheneinheit erzeugten Daten.

**14.** System nach Anspruch 12, dadurch gekennzeichnet, daß die Zentralrecheneinheit außerdem zum Erzeugen von L\*a\*b-Werten für jede Farbprobe mit gespeicherten Charakteristiken softwaregesteuert ist.

**Revendications**

**1.** Procédé de génération d'un jeu d'échantillons de couleurs, ainsi que des caractéristiques de ceux-ci, le procédé comprenant les étapes de :
a) sélection d'au moins deux couleurs de référence ;
b) entrée d'un jeu de données de caractéristiques de couleurs indiquant la réflectance de chacune des couleurs de référence sélectionnées à chacune des longueurs d'onde d'un jeu de longueurs d'onde prédéterminées ;
c) génération de types pour un jeu d'échantillons de couleurs intermédiaires par :
    i) sélection d'au moins deux couleurs de base parmi le jeu de couleurs de référence pour lesquelles un jeu de données de caractéristiques de couleurs est disponible ;
    ii) sélection du nombre de couleurs intermédiaires devant être identifiées par les caractéristiques de couleurs des couleurs de base sélectionnées;

iii) détermination des proportions relatives de chaque couleur de base qui caractérise chaque couleur intermédiaire devant être décrite ;

iv) calcul des valeurs de réflectance à chaque longueur d'onde prédéterminée pour chaque couleur intermédiaire, proportionnées à la somme des valeurs de réflectance de chaque couleur de base à chaque longueur d'onde correspondante multipliée par la proportion relative de chaque couleur de base qui caractérise la couleur intermédiaire, pour chaque couleur intermédiaire décrite ; et

v) enregistrement des valeurs de réflectance calculées ; et

d) fourniture d'échantillons desdites couleurs intermédiaires par mélange de parts de colorants, représentant chacun une des couleurs de base sélectionnées, dans des proportions correspondant aux proportions des couleurs de base qui caractérisent l'échantillon de couleur, pour chaque échantillon de couleur devant être généré.

2. Procédé de la revendication 1 dans lequel l'étape de sélection de couleurs de référence inclut également la sélection de couleurs de référence ayant des valeurs L* égales.

3. Procédé de la revendication 1 comprenant également les étapes de :

a) description de chacune des couleurs de référence sélectionnées par un jeu de données de caractéristiques de couleurs comprenant également des données indiquant les valeurs trichromatiques de chaque couleur ; et

b) génération de valeurs trichromatiques pour chaque couleur intermédiaire qui sont proportionnées aux valeurs trichromatiques de chaque couleur de base, et du poids relatif à donner à chaque couleur de base, pour chaque couleur intermédiaire devant être décrite.

4. Procédé de la revendication 1 comprenant également les étapes de :

a) sélection d'un jeu de couleurs de base différent de tout jeu de couleurs de base sélectionné auparavant ;

b) description du jeu différent sélectionné de couleurs de base par un jeu de données de caractéristiques de couleurs indiquant la réflectance de chaque couleur à chacune des longueurs d'ondes d'un jeu de longueurs d'onde prédéterminées ;

c) réitération des étapes de génération de types de chaque échantillon de couleur intermédiaire, en utilisant le jeu nouvellement sélectionné de couleurs de base ; et

d) réitération de l'étape de sélection d'un jeu différent de couleurs de base jusqu'à ce que tous les jeux de données de caractéristiques d'échantillons de couleurs intermédiaires devant être générés soient générés.

5. Procédé de la revendication 3 comprenant également les étapes de :

a) sélection d'un jeu de couleurs de base différent de tout jeu de couleurs de base sélectionné auparavant ;

b) description du jeu différent sélectionné de couleurs de base par un jeu de données de caractéristiques de couleurs indiquant la réflectance de chaque couleur à chacune des longueurs d'ondes d'un jeu de longueurs d'onde prédéterminées et par des données indiquant les valeurs trichromatiques de chaque couleur;

c) réitération des étapes de génération de types de chaque échantillon de couleur intermédiaire, en utilisant le jeu nouvellement sélectionné de couleurs de base ; et

d) réitération de l'étape de sélection d'un jeu différent de couleurs de base jusqu'à ce que tous les jeux de données de caractéristiques d'échantillons de couleurs intermédiaires devant être générés soient générés.

6. Procédé de la revendication 1 comprenant également l'étape de calcul des valeurs L*a*b pour chaque couleur intermédiaire à partir dse données de caractéristiques de couleurs générées pour chaque couleur intermédiaire.

7. Procédé de la revendication 1 dans lequel les couleurs de références sont sélectionnées parmi les couleurs suivantes : gris, rouge, jaune, orange, vert, bleu, jaune-vert, bleu-vert, et violet.

8. Procédé de la revendication 7 dans lequel le nombre de couleurs de référence sélectionnées est quatre.

**9.** Procédé selon l'une quelconque des revendications précédentes comprenant également l'étape de :

localisation de chaque échantillon de couleur dans le plan L*a*b à l'emplacement correspondant généralement à son emplacement relatif par rapport à l'emplacement proche approprié de chaque couleur de base à partir de laquelle les données d'échantillons de couleurs ont été générées, la couleur de l'échantillon de couleur représentant la couleur mélangée lors de l'étape de mélange de parts de chacune des couleurs de base sélectionnées.

**10.** Procédé selon la revendication 9 comprenant également l'étape de qualification de chaque échantillon de couleur correspondant à un jeu de données de caractéristiques de couleurs d'une façon correspondant aux caractéristiques de l'échantillon de couleur généré.

**11.** Procédé selon la revendication 9 comprenant également l'étape de qualification de chaque échantillon de couleur avec des codes représentatifs de la proportion de chacune des couleurs de base représentées par l'échantillon de couleur.

**12.** Système de générération d'un jeu d'échantillons de couleurs, ainsi que des caractéristiques de ceux-ci, comprenant :

a) des moyens de stockage (20) permettant de stocker des données de caractéristiques de couleurs indiquant la réflectance de chacune des couleurs de références d'un jeu à chacune des longueurs d'onde prédéterminées d'un jeu, et de stocker des données indiquant le nombre de couleurs intermédiaires devant être générées ;

b) des moyens de traitement centraux (24) sous contrôle logiciel permettant de :

i) entrer les données stockées dans les moyens de stockage ;

ii) sélectionner au moins deux couleurs de base parmi les couleurs de référence possédant des données stockées dans les moyens de stockage ;

iii) sélectionner le nombre de couleurs intermédiaires devant être identifiées par les caractéristiques de couleurs des couleurs de base sélectionnées;

iv) calculer les proportions relatives de chacune des couleurs de base sélectionnées qui caractérise chaque couleur intermédiaire devant être décrite ; et

v) calculer les valeurs de réflectance à chaque longueur d'onde prédéterminée pour chaque couleur intermédiaire, proportionnées à la somme des valeurs de réflectance de chaque couleur de base à chaque longueur d'onde correspondante multipliée par la proportion relative de chaque couleur de base qui caractérise la couleur intermédiaire, pour chaque couleur intermédiaire décrite ; et

c) des moyens de sortie (28) permettant de délivrer les valeurs calculées par les moyens de traitement centraux et permettant de délivrer les proportions relatives de colorants représentant lesdites couleurs de base nécessaires à la fourniture d'échantillons de chacunes desdites couleurs intermédiaires.

**13.** Système selon la revendication 12, comprenant également des seconds moyens de stockage (22) permettant de stocker les données générées par les moyens de traitement centraux.

**14.** Système selon la revendication 12, dans lequel les moyens de traitement centraux sont également sous contrôle logiciel afin de générer des valeurs L*a*b pour chaque échantillon de couleur possédant des caractéristiques stockées.

FIG. 1

Master Plan

FIG. 2

15

## FIG. 3

INPUT/
OUTPUT — 28

22

| 6 |
|---|
| Software |

SAMPLE
QUANTITY
DATA

CENTRAL
PROCESSING
UNIT

Software

80

24

— 20

| 35.25,51.91, | Red | | Blue |
|---|---|---|---|
| ••• ,89.41, | Red | | |
| 51.95, ••• | Red | | |
| 67.24,85.13, | Purple | | Gray |
| ••• ,81.13, | | | |
| ••• ,81.12 | | | |

REFERENCE
COLOR
STORED DATA

— 58

| RP1 | 39.82,56.66, | ••• |
|---|---|---|
| | ••• ,87.14, | |
| | 85.66, ••• | |
| RP2 | 44.39,61.40, | ••• |
| | ••• | |
| | | |
| ⋮ | ⋮ | ••• |
| RP6 | 62.67,80.38, | ••• |
| | ••• | |
| | | |
| RP7 | ••• | ••• |

50

52

54

56

26

INTERMEDIATE
COLOR
STORED DATA

$+L$

$+a$

$+b$

32 — RP0

34 — RP1

30

36 — RP2

38 — RP3

40 — RP4

42 — RP5

44 — RP6

46 — RP7

FIG. 4

EP 0 407 381 B1

FIG. 5A

A

CALCULATE XYZ VALUES
FOR COLORS $K_1, K_2, \cdots, K_S$

$$X_{K_Q} = \sum_{N=1}^{J} X_{C_N} P_{C_N K_Q}$$

$$Y_{K_Q} = \sum_{N=1}^{J} Y_{C_N} P_{C_N K_Q}$$

$$Z_{K_Q} = \sum_{N=1}^{J} Z_{C_N} P_{C_N K_Q}$$

$$Q = \Big|_1^S$$

— 160

CALCULATE L*a*b VALUES
FOR COLORS $K_1, K_2, \cdots, K_S$

$$L^*_{K_Q} = f(Y_{K_Q})$$

$$a^*_{K_Q} = f(X_{K_Q}, Y_{K_Q})$$

$$b_{K_Q} = f(Y_{K_Q} Z_{K_Q})$$

$$Q = \Big|_1^S$$

— 170

STOP — 180

# FIG. 5B